# EUROPEAN PATENT SPECIFICATION

(11) **EP 3 091 748 B1**
(45) Date of publication and mention of the grant of the patent: **12.09.2018**
(21) Application number: 16150658.9
(22) Date of filing: 08.01.2016
(51) Int. Cl.: H04N 21/4402, H04N 21/472, H04N 21/414, H04N 21/4728, G06F 3/048, G06F 3/0488, H04N 21/41, H04N 21/6587

(54) **METHODS AND SYSTEMS FOR VIEWING EMBEDDED VIDEOS**
VERFAHREN UND SYSTEME ZUM BETRACHTEN EINGEBETTETER VIDEOS
PROCÉDÉS ET SYSTÈMES PERMETTANT DE VISUALISER DES VIDÉOS INCORPORÉES

(30) Priority: 05.05.2015 US 201514704472; 08.05.2015 US 201514708080; 11.05.2015 WO PCT/US2015/030204
(43) Date of publication of application: 09.11.2016
(73) Proprietor: Facebook, Inc., Menlo Park, CA 94025 (US)
(72) Inventor: RECKHOW, Michael Waldman, Menlo Park, CA 94025 (US); MATAS, Michael James, Menlo Park, CA 94025 (US)
(74) Representative: Schröer, Gernot H.

(56) References cited:
- US-A1- 2011 271 227
- US-A1- 2013 145 267
- US-A1- 2014 270 684
- US-A1- 2015 015 789
- US-A1- 2015 062 178

## Description

### TECHNICAL FIELD

This relates generally to viewing embedded content in an item of content, including but not limited to using gestures to view embedded content.

### BACKGROUND

The Internet has become an increasingly dominant platform for the publication of electronic content, for both the media and the general population. Electronic content takes on many forms, some with which a consumer can interact, such as embedded pictures or videos a consumer may view and manipulate. The embedded pictures or videos are embedded, for example, in digital items of content.

As the use of mobile devices for digesting electronic content becomes more prevalent, consumers often struggle to view and interact with embedded electronic content in an efficient and effective manner. US 2015/062178 A1 relates to a method for scrolling image.

US 2013/145267 A1 relates to video streaming in a web browser.

### SUMMARY

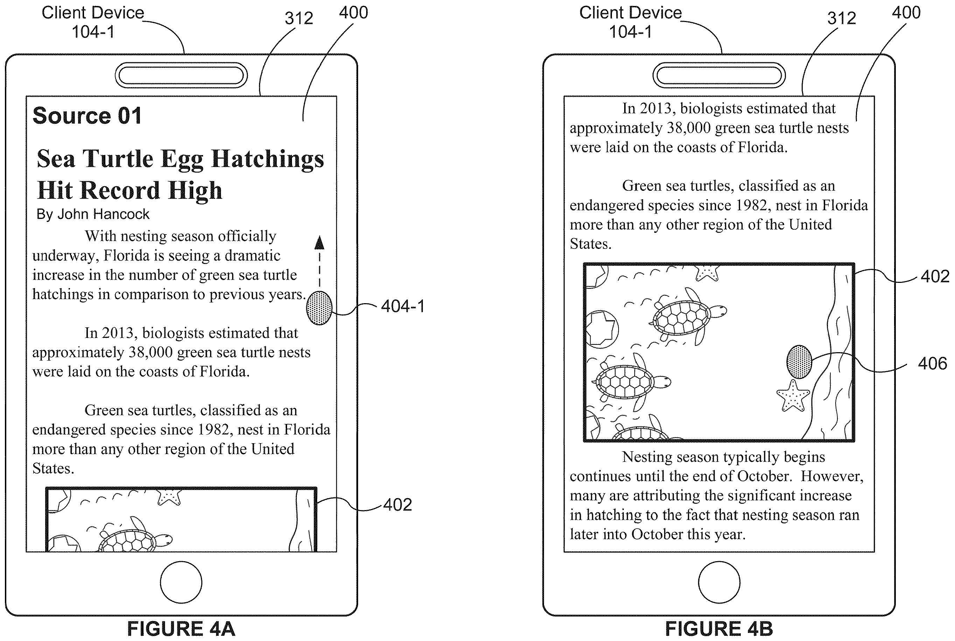

The present invention is defined in the independent claims. Enabling disclosure for the invention is found in the embodiment of Figures 4A-4G. The remaining embodiments are to be understood as examples which do not describe parts of the present invention.

### BRIEF DESCRIPTION OF THE DRAWINGS

For a better understanding of the various described embodiments, reference should be made to the Description of Embodiments below, in conjunction with the following drawings. Like reference numerals refer to corresponding parts throughout the figures and description.
- Figure 1: is a block diagram illustrating an exemplary network architecture of a social network in accordance with some embodiments.
- Figure 2: is a block diagram illustrating an exemplary social-network system in accordance with some embodiments.
- Figure 3: is a block diagram illustrating an exemplary client device in accordance with some embodiments.
- Figures 4A-4G: illustrate exemplary graphical user interfaces (GUIs) on a client device for viewing video, in accordance with some embodiments.
- Figures 5A-5D: are flow diagrams illustrating a method of viewing embedded videos, in accordance with some embodiments.

### DESCRIPTION OF EMBODIMENTS

Reference will now be made to embodiments, examples of which are illustrated in the accompanying drawings. In the following description, numerous specific details are set forth in order to provide an understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It will also be understood that, although the terms first, second, etc. are, in some instances, used herein to describe various elements, these elements should not be limited by these terms. These terms are used only to distinguish one element from another. For example, a first portion of an item of content could be termed a second portion of the item of content, and, similarly, a second portion of the item of content could be termed a first portion of the item of content, without departing from the scope of the various described embodiments. The first portion of the item of content and the second portion of the item of content are both portions of the item of content, but they are not the same portion.

The terminology used in the description of the various embodiments described herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

As used herein, the term "exemplary" is used in the sense of "serving as an example, instance, or illustration" and not in the sense of "representing the best of its kind."

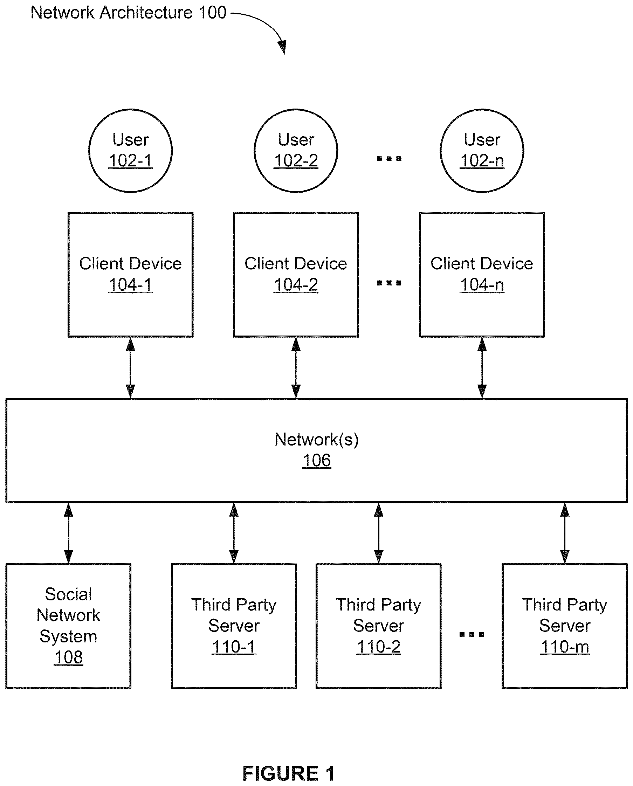

Figure 1 is a block diagram illustrating an exemplary network architecture 100 of a social network in accordance with some embodiments. The network architecture 100 includes a number of client devices (also called "client systems," "client computers," or "clients") 104-1, 104-2, ... 104-n communicably connected to an electronic social-network system 108 by one or more networks 106 (e.g., the Internet, cellular telephone networks, mobile data networks, other wide area networks, local area networks, metropolitan area networks, and so on). In some embodiments, the one or more networks 106 include a public communication network (e.g., the Internet and/or a cellular data network), a private communications network (e.g., a private LAN or leased lines), or a combination of such communication networks.

In some embodiments, the client devices 104-1, 104-2, ... 104-n are computing devices such as smart watches, personal digital assistants, portable media players, smart phones, tablet computers, 2D gaming devices, 3D (e.g., virtual reality) gaming devices, laptop computers, desktop computers, televisions with one or more processors embedded therein or coupled thereto, invehicle information systems (e.g., an in-car computer system that provides navigation, entertainment, and/or other information), and/or other appropriate computing devices that can be used to communicate with the social-network system 108. In some embodiments, the social-network system 108 is a single computing device such as a computer server, while in other embodiments, the social-network system 108 is implemented by multiple computing devices working together to perform the actions of a server system (e.g., cloud computing).

Users 102-1, 102-2, ... 102-n employ the client devices 104-1, 104-2, ... 104-n to access the social-network system 108 and to participate in a corresponding social-networking service provided by the social-network system 108. For example, one or more of the client devices 104-1, 104-2, ... 104-n execute web browser applications that can be used to access the social-networking service. As another example, one or more of the client devices 104-1, 104-2, ... 104-n execute software applications that are specific to the social-networking service (e.g., social-networking "apps" running on smart phones or tablets, such as a Facebook social-networking application running on an iPhone, Android, or Windows smart phone or tablet).

Users interacting with the client devices 104-1, 104-2, ... 104-n can participate in the social-networking service provided by the social-network system 108 by posting information (e.g., items of content), such as text comments (e.g., updates, announcements, replies), digital photos, videos, audio files, links, and/or other electronic content. Users of the social-networking service can also annotate information (e.g., items of content) posted by other users of the social-networking service (e.g., endorsing or "liking" a posting of another user, or commenting on a posting by another user). In some embodiments, an item of content includes embedded video. In some embodiments, information can be posted on a user's behalf by systems and/or services external to the social-network system 108. For example, the user may post a review of a movie to a movie-review website, and with proper permissions that website may cross-post the review to the social network system 108 on the user's behalf. In another example, a software application executing on a mobile client device, with proper permissions, may use global positioning system (GPS) or other geo-location capabilities (e.g., Wi-Fi or hybrid positioning systems) to determine the user's location and update the social network system 108 with the user's location (e.g., "At Home", "At Work", or "In San Francisco, CA"), and/or update the social network system 108 with information derived from and/or based on the user's location. Users interacting with the client devices 104-1, 104-2, ... 104-n can also use the social-networking service provided by the social-network system 108 to define groups of users. Users interacting with the client devices 104-1, 104-2, ... 104-n can also use the social-networking service provided by the social-network system 108 to communicate and collaborate with each other.

In some embodiments, the network architecture 100 also includes third-party servers 110-1, 110-2, ... 110-m. In some embodiments, a given third-party server 110 is used to host third-party websites that provide web pages to client devices 104, either directly or in conjunction with the social-network system 108. In some embodiments, the social-network system 108 uses inline frames ("iframes") to nest independent websites within a user's social network session. In some embodiments, a given third-party server is used to host third-party applications that are used by client devices 104, either directly or in conjunction with the social-network system 108. In some embodiments, the social-network system 108 uses iframes to enable third-party developers to create applications that are hosted separately by a third-party server 110, but operate within a social-networking session of a user 102 and are accessed through the user's profile in the social-network system 108. Exemplary third-party applications include applications for books, business, communication, contests, education, entertainment, fashion, finance, food and drink, games, health and fitness, lifestyle, local information, movies, television, music and audio, news, photos, video, productivity, reference material, security, shopping, sports, travel, utilities, and the like. In some embodiments, a given third-party server 110 is used to host enterprise systems, which are used by client devices 104, either directly or in conjunction with the social-network system 108. In some embodiments, a given third-party server 110 is used to provide third-party content, such as items of content (e.g., news articles, reviews, message feeds, etc.). Items of content may include embedded videos (e.g., MPEG, AVI, JavaScript video, HTML5, etc.) and/or other electronic content with which a user may interact (e.g., interactive maps, advertisements, games, etc.).

In some embodiments, a given third-party server 110 is a single computing device, while in other embodiments, a given third-party server 110 is implemented by multiple computing devices working together to perform the actions of a server system (e.g., cloud computing).

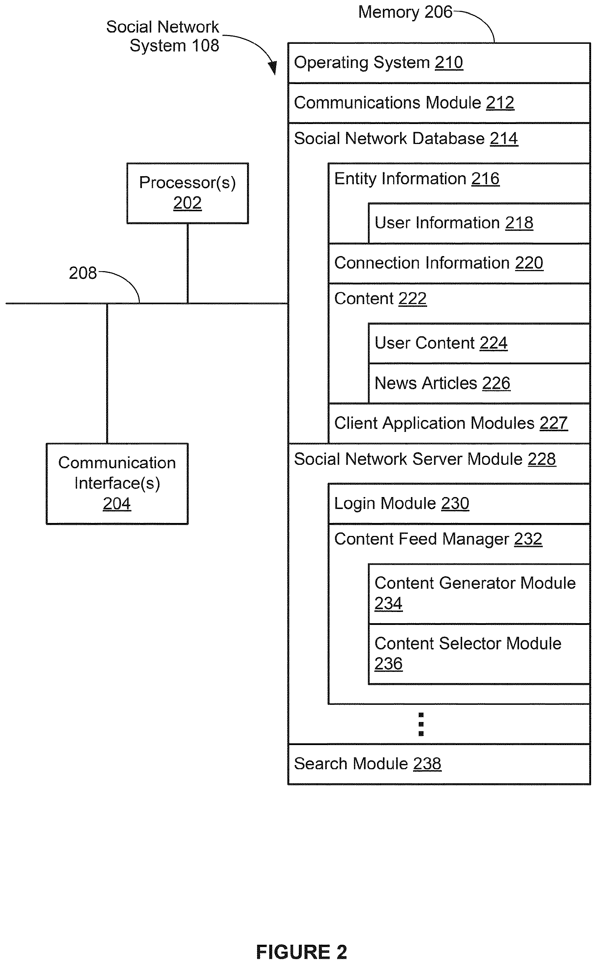

Figure 2 is a block diagram illustrating an exemplary social-network system 108 in accordance with some embodiments. The social-network system 108 typically includes one or more processing units (processors or cores) 202, one or more network or other communications interfaces 204, memory 206, and one or more communication buses 208 for interconnecting these components. The communication buses 208 optionally include circuitry (sometimes called a chipset) that interconnects and controls communications between system components. The social-network system 108 optionally includes a user interface (not shown). The user interface, if provided, may include a display device and optionally includes inputs such as a keyboard, mouse, trackpad, and/or input buttons. Alternatively or in addition, the display device includes a touch-sensitive surface, in which case the display is a touch-sensitive display.

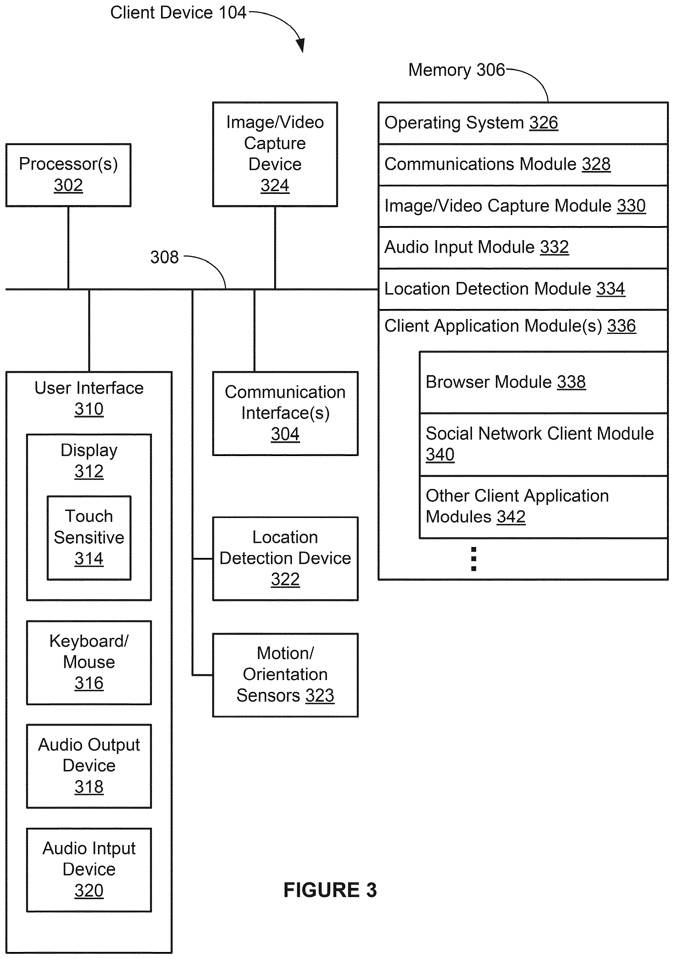

Memory 206 includes high-speed random-access memory, such as DRAM, SRAM, DDR RAM, or other random-access solid-state memory devices; and may include non-volatile memory, such as one or more magnetic disk storage devices, optical disk storage devices, flash memory devices, and/or other non-volatile solid-state storage devices. Memory 206 may optionally include one or more storage devices remotely located from the processor(s) 202. Memory 206, or alternately the non-volatile memory device(s) within memory 206, includes a non-transitory computer-readable storage medium. In some embodiments, memory 206 or the computer-readable storage medium of memory 206 stores the following programs, modules and data structures, or a subset or superset thereof:
- an operating system 210 that includes procedures for handling various basic system services and for performing hardware dependent tasks;
- a network communication module 212 that is used for connecting the social-network system 108 to other computers via the one or more communication network interfaces 204 (wired or wireless) and one or more communication networks (e.g., the one or more networks 106)
- a social network database 214 for storing data associated with the social network, such as:
   ∘ entity information 216, such as user information 218;
   ∘ connection information 220; and
   ∘ content 222, such as user content 224 (e.g., items of content with embedded videos, and/or other electronic content with which a user may interact, such as interactive maps, advertisements, games, etc.) and/or news articles 226;
- a social network server module 228 for providing social-networking services and related features (e.g., in conjunction with browser module 338 or social network client module 340 on the client device 104, Figure 3), which includes:
   ∘ a login module 230 for logging a user 102 at a client 104 into the social-network system 108; and
   ∘ a content feed manager 232 for providing content to be sent to clients 104 for display, which includes:
      ▪ a content generator module 234 for adding objects to the social network database 214, such as images, videos, audio files, comments, status messages, links, applications, and/or other entity information 216, connection information 220, or content 222; and
      ▪ a content selector module 236 for choosing the information/content to be sent to clients 104 for display; and
- a search module 238 for enabling users of the social-network system to search for content and other users in the social network.

The social network database 214 stores data associated with the social network in one or more types of databases, such as graph, dimensional, flat, hierarchical, network, object-oriented, relational, and/or XML databases.

In some embodiments, the social network database 214 includes a graph database, with entity information 216 represented as nodes in the graph database and connection information 220 represented as edges in the graph database. The graph database includes a plurality of nodes, as well as a plurality of edges that define connections between corresponding nodes. In some embodiments, the nodes and/or edges themselves are data objects that include the identifiers, attributes, and information for their corresponding entities, some of which are rendered at clients 104 on corresponding profile pages or other pages in the social-networking service. In some embodiments, the nodes also include pointers or references to other objects, data structures, or resources for use in rendering content in conjunction with the rendering of the pages corresponding to the respective nodes at clients 104.

Entity information 216 includes user information 218, such as user profiles, login information, privacy and other preferences, biographical data, and the like. In some embodiments, for a given user, the user information 218 includes the user's name, profile picture, contact information, birth date, sex, marital status, family status, employment, education background, preferences, interests, and/or other demographic information.

In some embodiments, entity information 216 includes information about a physical location (e.g., a restaurant, theater, landmark, city, state, or country), real or intellectual property (e.g., a sculpture, painting, movie, game, song, idea/concept, photograph, or written work), a business, a group of people, and/or a group of businesses. In some embodiments, entity information 216 includes information about a resource, such as an audio file, a video file, a digital photo, a text file, a structured document (e.g., web page), or an application. In some embodiments, the resource is located in the social-network system 108 (e.g., in content 222) or on an external server, such as third-party server 110.

In some embodiments, connection information 220 includes information about the relationships between entities in the social network database 214. In some embodiments, connection information 220 includes information about edges that connect pairs of nodes in a graph database. In some embodiments, an edge connecting a pair of nodes represents a relationship between the pair of nodes.

In some embodiments, an edge includes or represents one or more data objects or attributes that correspond to the relationship between a pair of nodes. For example, when a first user indicates that a second user is a "friend" of the first user, the social-network system 108 transmits a "friend request" to the second user. If the second user confirms the "friend request," the social-network system 108 creates and stores an edge connecting the first user's user node and the second user's user node in a graph database as connection information 220 that indicates that the first user and the second user are friends. In some embodiments, connection information 220 represents a friendship, a family relationship, a business or employment relationship, a fan relationship, a follower relationship, a visitor relationship, a subscriber relationship, a superior/subordinate relationship, a reciprocal relationship, a non-reciprocal relationship, another suitable type of relationship, or two or more such relationships.

In some embodiments, an edge between a user node and another entity node represents connection information about a particular action or activity performed by a user of the user node towards the other entity node. For example, a user may "like" or have "attended," "played," "listened," "cooked," "worked at," or "watched" the entity at the other node. The page in the social-networking service that corresponds to the entity at the other node may include, for example, a selectable "like," "check in," or "add to favorites" icon. After the user clicks one of these icons, the social-network system 108 may create a "like" edge, "check in" edge, or a "favorites" edge in response to the corresponding user action. As another example, the user may listen to a particular song using a particular application (e.g., an online music application). In this case, the social-network system 108 may create a "listened" edge and a "used" edge between the user node that corresponds to the user and the entity nodes that correspond to the song and the application, respectively, to indicate that the user listened to the song and used the application. In addition, the social-network system 108 may create a "played" edge between the entity nodes that correspond to the song and the application to indicate that the particular song was played by the particular application.

In some embodiments, content 222 includes text (e.g., ASCII, SGML, HTML), images (e.g., jpeg, tif and gif), graphics (e.g., vector-based or bitmap), audio, video (e.g., MPEG, AVI, JavaScript video, HTML5), other multimedia, and/or combinations thereof. In some embodiments, content 222 includes executable code (e.g., games executable within a browser window or frame), podcasts, links, and the like.

In some embodiments, the social network server module 228 includes web or Hypertext Transfer Protocol (HTTP) servers, File Transfer Protocol (FTP) servers, as well as web pages and applications implemented using Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

Figure 3 is a block diagram illustrating an exemplary client device 104 in accordance with some embodiments. The client device 104 typically includes one or more processing units (processors or cores) 302, one or more network or other communications interfaces 304, memory 306, and one or more communication buses 308 for interconnecting these components. The communication buses 308 optionally include circuitry (sometimes called a chipset) that interconnects and controls communications between system components. The client device 104 includes a user interface 310. The user interface 310 typically includes a display device 312. In some embodiments, the client device 104 includes inputs such as a keyboard, mouse, and/or other input buttons 316. Alternatively or in addition, in some embodiments, the display device 312 includes a touch-sensitive surface 314, in which case the display device 312 is a touch-sensitive display. In some embodiments, the touch-sensitive surface 314 is configured to detect various swipe gestures (e.g., in vertical and/or horizontal directions) and/or other gestures (e.g., single/double tap). In client devices that have a touch-sensitive display 312, a physical keyboard is optional (e.g., a soft keyboard may be displayed when keyboard entry is needed). The user interface 310 also includes an audio output device 318, such as speakers or an audio output connection connected to speakers, earphones, or headphones. Furthermore, some client devices 104 use a microphone and voice recognition to supplement or replace the keyboard. Optionally, the client device 104 includes an audio input device 320 (e.g., a microphone) to capture audio (e.g., speech from a user). Optionally, the client device 104 includes a location detection device 322, such as a GPS (global positioning satellite) or other geo-location receiver, for determining the location of the client device 104. The client device 104 also optionally includes an image/video capture device 324, such as a camera or webcam.

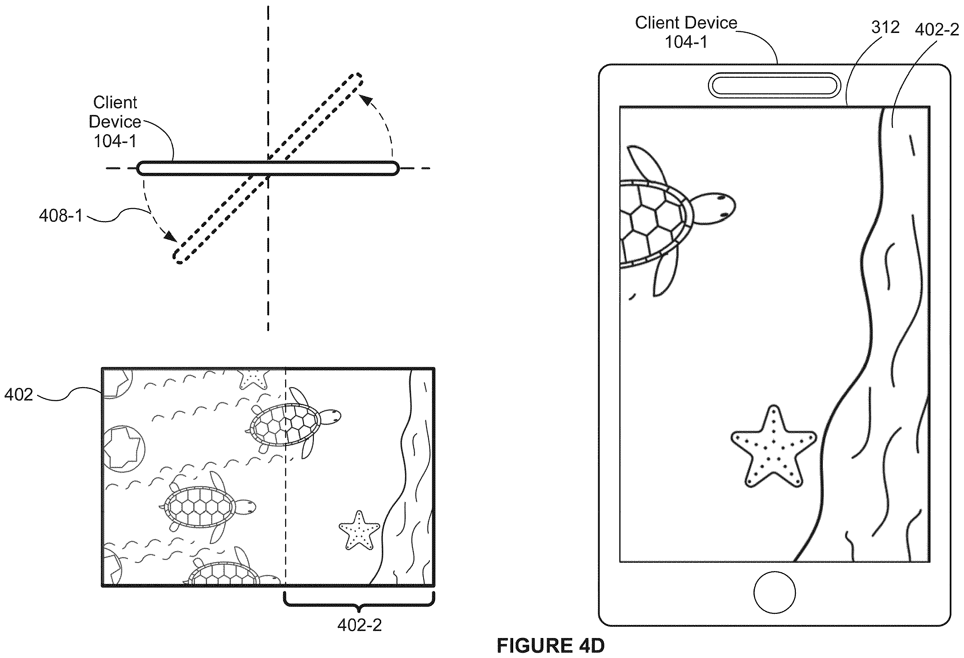

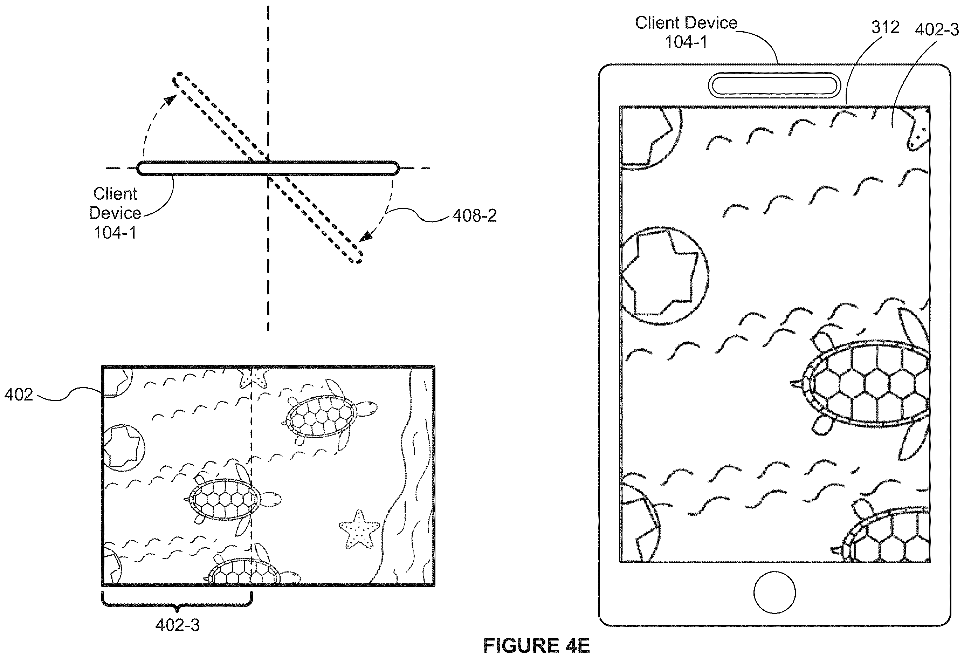

In some embodiments, the client device 104 includes one or more optional sensors 323 (e.g., gyroscope, accelerometer) for detecting a motion and/or change in orientation of the client device. In some embodiments, a detected motion and/or orientation of the client device 104 (e.g., the motion/change in orientation corresponding to a user input produced by a user of the client device) is used to manipulate an interface (or videos within the interface) displayed on the client device 104 (e.g., viewing different regions of a displayed embedded video, as shown in Figures 4D and 4E).

Memory 306 includes high-speed random-access memory, such as DRAM, SRAM, DDR RAM or other random-access solid-state memory devices; and may include non-volatile memory, such as one or more magnetic disk storage devices, optical disk storage devices, flash memory devices, or other non-volatile solid-state storage devices. Memory 306 may optionally include one or more storage devices remotely located from the processor(s) 302. Memory 306, or alternately the non-volatile memory device(s) within memory 306, includes a non-transitory computer-readable storage medium. In some embodiments, memory 306 or the computer-readable storage medium of memory 306 stores the following programs, modules and data structures, or a subset or superset thereof:
- an operating system 326 that includes procedures for handling various basic system services and for performing hardware dependent tasks;
- a network communication module 328 that is used for connecting the client device 104 to other computers via the one or more communication network interfaces 304 (wired or wireless) and one or more communication networks, such as the Internet, cellular telephone networks, mobile data networks, other wide area networks, local area networks, metropolitan area networks, and so on;
- an image/video capture module 330 (e.g., a camera module) for processing a respective image or video captured by the image/video capture device 324, where the respective image or video may be sent or streamed (e.g., by a client application module 336) to the social-network system 108;
- an audio input module 332 (e.g., a microphone module) for processing audio captured by the audio input device 320, where the respective audio may be sent or streamed (e.g., by a client application module 336) to the social-network system 108;
- a location detection module 334 (e.g., a GPS, Wi-Fi, or hybrid positioning module) for determining the location of the client device 104 (e.g., using the location detection device 322) and providing this location information for use in various applications (e.g., social network client module 340); and
- one or more client application modules 336, including the following modules (or sets of instructions), or a subset or superset thereof:
   o a web browser module 338 (e.g., Internet Explorer by Microsoft, Firefox by Mozilla, Safari by Apple, or Chrome by Google) for accessing, viewing, and interacting with web sites (e.g., a social-networking web site provided by the social-network system 108 and/or web sites that are linked to in a social network module 340 and/or an optional client application module 342), such as a web site hosting a service for displaying and accessing items of content (e.g., news articles) with embedded videos (e.g., MPEG, AVI, JavaScript video, HTML5, etc.) and/or other electronic content with which a user may interact
   ∘ a social network module 340 for providing an interface to a social-networking service (e.g., a social-networking service provided by social-network system 108) and related features, such as an interface to a service for displaying and accessing items of content (e.g., news articles) with embedded videos (e.g., MPEG, AVI, JavaScript video, HTML5, etc.) and/or other electronic content with which a user may interact; and/or
   ∘ optional client application modules 342, such as applications for displaying and accessing items of content (e.g., news articles) with embedded videos (e.g., MPEG, AVI, JavaScript video, HTML5, etc.) and/or other electronic content with which a user may interact, word processing, calendaring, mapping, weather, stocks, time keeping, virtual digital assistant, presenting, number crunching (spreadsheets), drawing, instant messaging, e mail, telephony, video conferencing, photo management, video management, a digital music player, a digital video player, 2D gaming, 3D (e.g., virtual reality) gaming, electronic book reader, and/or workout support.

Each of the above identified modules and applications correspond to a set of executable instructions for performing one or more functions as described above and/or in the methods described in this application (e.g., the computer-implemented methods and other information processing methods described herein). These modules (i.e., sets of instructions) need not be implemented as separate software programs, procedures or modules, and thus various subsets of these modules are, optionally, combined or otherwise re-arranged in various embodiments. In some embodiments, memory 206 and/or 306 store a subset of the modules and data structures identified above. Furthermore, memory 206 and/or 306 optionally store additional modules and data structures not described above.

Attention is now directed towards embodiments of graphical user interfaces ("GUIs") and associated processes that may be implemented on a client device (e.g., client device 104, Figures 1 and 3).

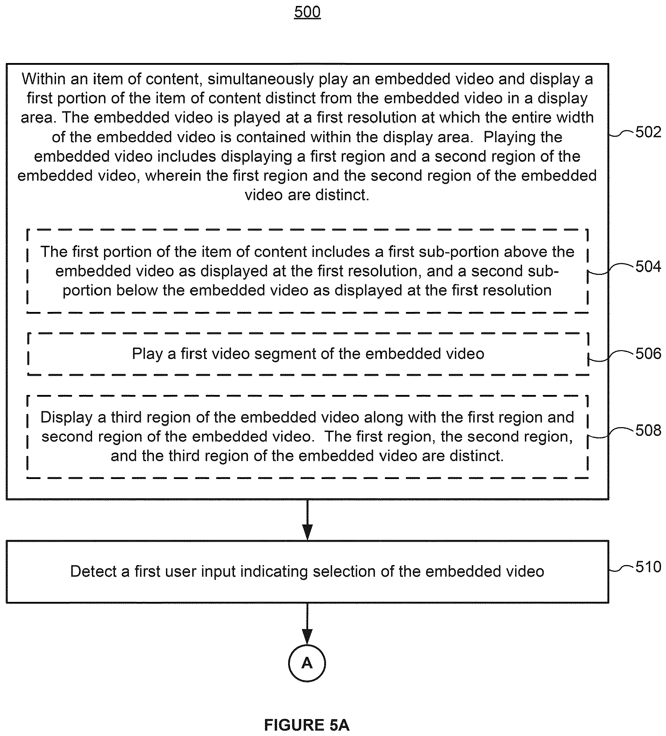

Figures 4A-4G illustrate exemplary GUIs on a client device 104 for viewing items of content that include videos embedded within them, in accordance with some embodiments. The GUIs in these figures are displayed in response to detected user inputs, starting from the displayed item of content 400 (Figure 4A), and are used to illustrate the processes described below, including the method 500 (Figures 5A-5D). The GUIs may be provided by a web browser (e.g., web browser module 338, Figure 3), an application for a social-networking service (e.g., social network module 340), and/or a third-party application (e.g., client application module 342). While Figures 4A-4G illustrate examples of GUIs, in other embodiments, a GUI displays user-interface elements in arrangements distinct from the embodiments of Figures 4A-4G.

The examples provided in Figures 4A-4G illustrate sequential still frames of an embedded video 402, where the embedded video is continually playing while various user inputs (e.g., swipe gestures, tilt gestures, etc.) are detected. Continual playback is shown by the subjects within the embedded video 402 changing positions at different times during playback of the embedded video, with each of the Figures 4A-4G representing a different time.

Figures 4A and 4B illustrate a GUI for an item of content 400 and embedded video 402. Items of content include various types of formatted content (e.g., web content, such as HTML-formatted documents, or documents in proprietary web formats), including but not limited to news articles, web pages, blogs, user content published via a social-networking service, and/or other types of published content. Items of content may include various types (i.e., coding/file formats) of embedded videos that may be played within the items of content. Types of embedded video include MPEG, AVI, JavaScript video, HTML5, or any other related video coding/file format. In Figures 4A and 4B, the item of content 400 is a news article (titled "Sea Turtle Egg Hatchings Hit Record High") that includes an embedded video 402 (playback of which shows sea turtles moving towards the water).

Swipe gesture 404-1 in Figure 4A corresponds to a vertical scroll for viewing and browsing the item of content 400, where the resulting view in Figure 4B allows the embedded video 402 to be shown in its entirety.

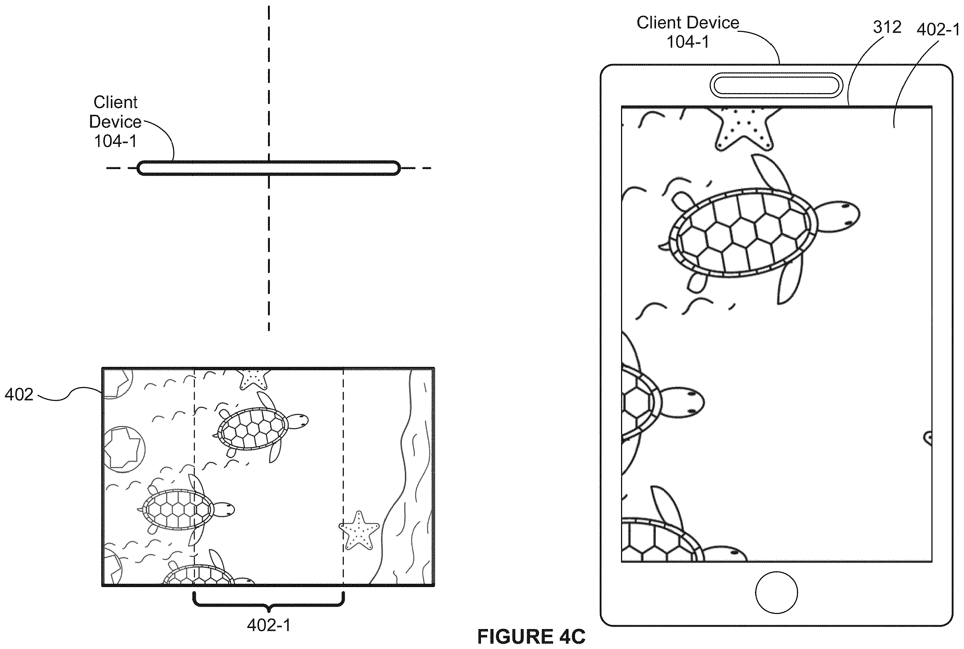

In Figure 4B, detecting a gesture 406 (e.g., a tap) on the embedded video 402 results in displaying the embedded video at a larger (i.e., higher, greater) resolution (Figure 4C) than the resolution at which the embedded video is displayed in Figure 4B. Only a region 402-1 of the embedded video is shown in Figure 4C, because the entire embedded video 402 does not fit with the display area at the larger resolution. While displaying the embedded video 402 at the larger resolution, detecting tilt gesture 408-1 (shown in Figure 4D for a cross-sectional view of the client device 104-1) results in displaying a different region 402-2 of the embedded video, while detecting tilt gesture 408-2 (Figure 4E) results in displaying yet another region 402-3 of the embedded video. The regions 402-1, 402-2, and 402-3 may or may not partially overlap (e.g., depending on the degree of tilt and/or the difference between the first and second resolutions).

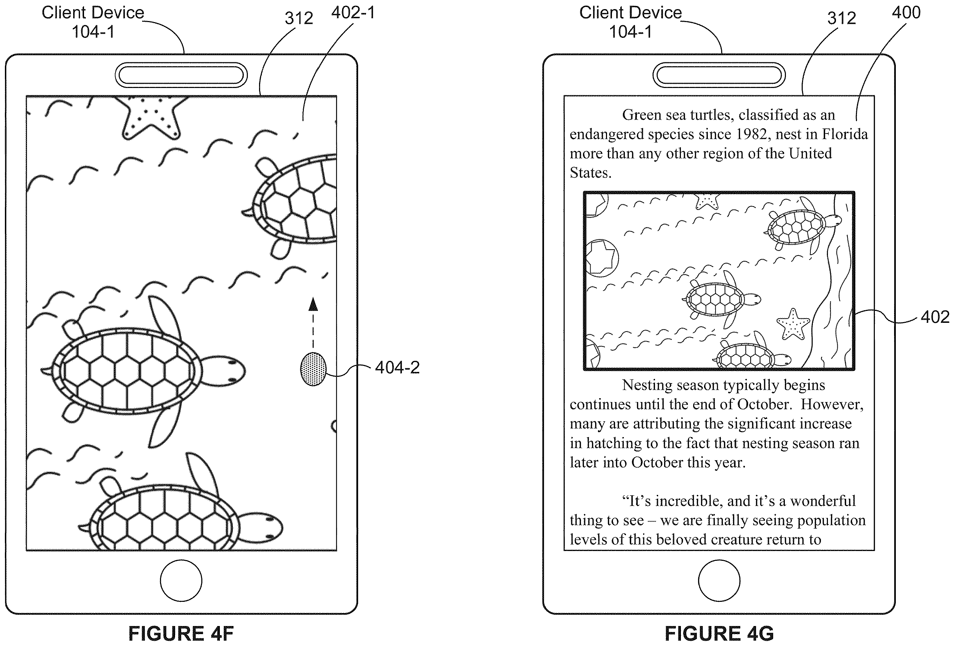

In Figure 4F, detecting a swipe gesture 404-2 (while displaying the embedded video 402 at the larger resolution) reverts back to displaying the embedded video 402 at the initial resolution (Figure 4B), as shown in Figure 4G.

The GUIs shown in Figures 4A-4G are described in greater detail below in conjunction with the method 500 of Figures 5A-5D.

Figures 5A-5D are flow diagrams illustrating the method 500 of viewing embedded videos, in accordance with some embodiments. The method 500 is performed on an electronic device (e.g., client device 104, Figures 1 and 3). Figures 5A-5D correspond to instructions stored in a computer memory (e.g., memory 306 of the client device 104, Figure 3) or other computer-readable storage medium. To assist with describing the method 500, Figures 5A-5D will be described with reference to the exemplary GUIs illustrated in Figures 4A-4G.

In the method 500, the electronic device simultaneously plays (502) an embedded video and displays a first portion of the item of content distinct from the embedded video in a display area. The embedded video is played at a first resolution at which the entire width of the embedded video is contained within the display area. Playing the embedded video includes displaying at least a first region and a second region of the embedded video, wherein the first region and the second region of the embedded video are distinct (e.g., are non-overlapping or only partially overlapping). As shown in the example of Figure 4A, the embedded video 402 is displayed at a resolution at which the entire width of the embedded video is contained within the display area.

As described above, items of content include various types of formatted content, which may include different types of embedded videos presentable to a user and with which a user may interact. In some embodiments, the item of content includes text, picture(s), and/or graphics. In Figure 4A, for example, the item of content 400 is a news article, a portion of which is simultaneously displayed with the embedded video 402, which is an associated video. Other examples of items of content include but are not limited to web pages, blogs, user content published via a social-networking service, and/or other types of published content. Other examples of embedded videos include other types of digital media or other electronic content with which a user may interact (e.g., interactive maps, advertisements, games, animations, etc.). In some embodiments, playback of an embedded video continues throughout a user interaction or series of user interactions.

In some embodiments, the electronic device includes a display device having a screen area (e.g., display device 312), and the display area occupies the screen area of the display device. The display area occupies (i.e., is coextensive with) the screen area of the display device. Referring to Figure 4B, for example, a portion of the item of content 400 and the embedded video 402 are simultaneously displayed in a display area, where the display area occupies the screen area of the display 312. In some embodiments, the display area occupies less than the screen area of the display device (e.g., the GUI displaying the item of content and embedded video is a window or tile that occupies only a fraction of the screen area).

In some embodiments, the first portion of the item of content includes (504) a first sub-portion above the embedded video as displayed at the first resolution, and a second sub-portion below the embedded video as displayed at the first resolution (e.g., Figure 4B, where sub-portions of the item of content 400 are shown above and below the embedded video 402; in the example of Figure 4B, these sub-portions are text).

In some embodiments, the display area has a display height and a display width, wherein the width of the embedded video being played at the first resolution is contained within the display width of the display area (e.g., equals the screen width, window width, or tile width). In some embodiments, the width of the embedded video being displayed at the first resolution is less than the display width (e.g., embedded video 402 as shown in Figure 4B).

In some embodiments, playing the embedded video at the first resolution (before detecting a first user input, step 510) includes (506) playing a first video segment of the embedded video. An embedded video 402 may be a video having a playback duration or length (e.g., 20-second video), and may include any number of sequential video segments having respective durations. The video segments composing an embedded video may therefore correspond to various time markers (e.g., start/end time markers) with respect to the playback length of an embedded video. As an example, an embedded video having a 20-second playback duration may include a first video segment having a 10-second duration, a second video segment having a 5-second duration, and a third video segment having a 5-second duration. In this example, the first video segment corresponds to a portion of the embedded video that begins at a 0-second first time marker and ends at a 10-second second time marker, the second video segment corresponds to a portion of the embedded video that begins at the 10-second second time marker and ends at a 15-second third time marker, and the third video segment corresponds to a portion of the embedded video that begins at the 15-second third time marker and ends at a 20-second time marker. In some embodiments, video segments of an embedded video are not predefined, and are determined in accordance with a respective time at which a user input is detected during playback of the embedded video. For example, a first video segment corresponds to a portion of the embedded video defined by the beginning of playback and an ending time marker determined by the time at which a user input (e.g., selection 510 of the embedded video) is detected.

In some embodiments, the electronic devices displays (508) a third region of the embedded video along with the first region and second region of the embedded video. The first region, the second region, and the third region of the embedded video are distinct (e.g., and together compose the entire embedded video). Displaying the embedded video 402 in Figure 4B, for example, may be viewed as displaying three distinct regions of the embedded video 402: a first region 402-1 (Figure 4C), a second region 402-2 (Figure 4D), and a third region 402-3 (Figure 4E). The first, second, and third regions of the embedded video may be partially distinct (i.e., some regions overlap with other regions, such as regions 402-1 through 402-3, Figure 4E) or entirely distinct (i.e., no two regions overlap).

A first user input indicating selection of the embedded video is detected (510). In some embodiments, the first user input is a touch gesture (e.g., tap) detected on the embedded video (e.g., gesture 406, Figure 4B).

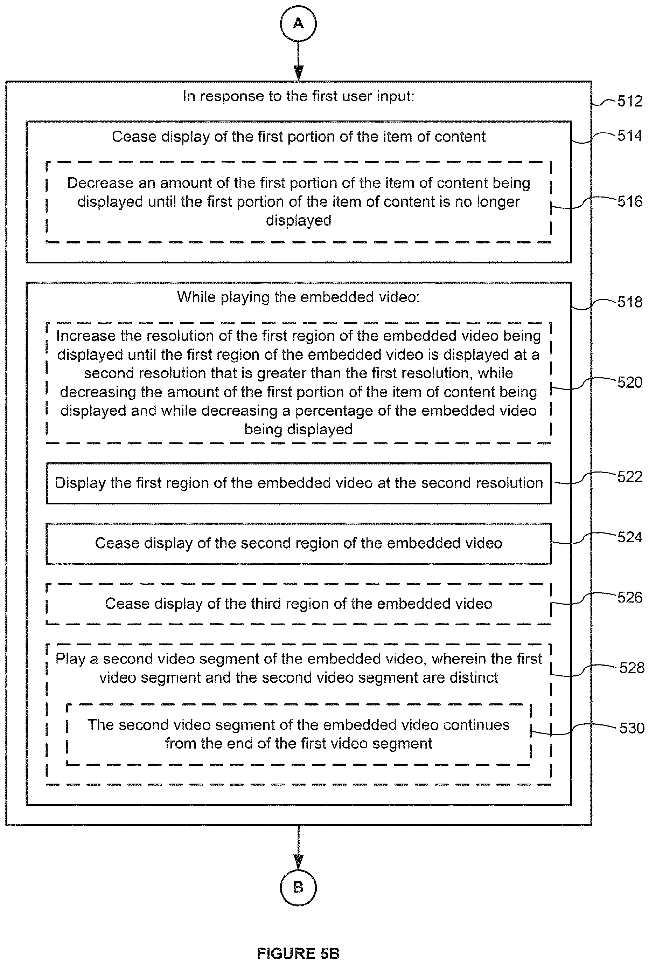

Referring now to Figure 5B, in response to the first user input (512), the electronic device ceases (514) display of the first portion of the item of content. Further, in response to the first user input (512) and while playing the embedded video (518), the electronic device displays (522) the first region of the embedded video at a second resolution that is greater than the first resolution and ceases (524) display of the second region of the embedded video. In some embodiments, the height of the first region of the embedded video at the second resolution equals the display height. An example is shown in Figures 4B and 4C, where the gesture 406 is detected on the embedded video 402 (Figure 4B). In response, the client device 104-1 ceases display of the item of content 400, and a first region of the embedded video 402-1 is displayed (Figure 4C) at a larger resolution than the displayed embedded video 402 (Figure 4B), such that the embedded video is effectively shown in a zoomed view.

In some embodiments, ceasing (514) display of the first portion of the item of content includes (516) decreasing an amount of the first portion of the item of content being displayed until the first portion of the item of content is no longer displayed (e.g., Figure 4C, where the first portion of the item of content 400 is not displayed). Decreasing the amount of the first portion of the item of content being displayed may include displaying various visual effects. For example, when transitioning from the GUI of Figure 4B to the GUI of Figure 4C in response to detecting the first user input, the displayed portions of the item of content 400 (Figure 4B) outside of the embedded video may appear as if they are being gradually shrunk while the resolution of the embedded video 402 proportionally increases. Alternatively, the displayed portions may appear as if being visually pushed or shifted off the visible boundaries defining the display area (i.e., off the edges of the display 312). In yet another embodiment, the displayed portions appear stationary, as the displayed embedded video 402 visually expands to the second resolution and "covers" the displayed portions (i.e., the displayed portions are effectively "beneath" or "behind" the embedded video 402).

In some embodiments, the resolution of the first region of the embedded video being displayed is increased (520) until the first region of the embedded video is displayed at the second resolution (that is greater than the first resolution). The resolution of the first region of the embedded video is increased while decreasing the amount of the first portion of the item of content being displayed, and while decreasing a percentage of the embedded video being displayed. For example, the first region of the embedded video 402-1 displayed in Figure 4C represents a smaller percentage of the embedded video 402 than the entire embedded video 402 displayed in Figure 4B.

In some embodiments, while playing the embedded video (518), the electronic devices ceases (526) display of the third region of the embedded video (in addition to ceasing display of the second region of the embedded video). For example, in Figure 4C, when displaying the first region of the embedded video 402-1, the adjacent regions (a second region to the left and a third region to the right of the first region 402-1, as illustrated in Figure 4C) are no longer displayed (or the non-overlapping portions of the adjacent regions are no longer displayed).

In some embodiments, a second video segment of the embedded video is played (528), wherein the first video segment (506) and the second video segment are distinct. As an example, the segment of the playing embedded video 402 starting from Figure 4A up until Figure 4C corresponds to a first video segment, and the segment starting from Figure 4C and onwards corresponds to a second video segment. In some embodiments, the first video segment and the second video segment are partially distinct (i.e., partially overlapping) (e.g., for a 20-second embedded video, the first video segment corresponds the segment between 0 and 15 seconds, and the second video segment corresponds the segment between 13 and 20 seconds). In some embodiments, the second video segment of the embedded video continues (530) from the end of the first video segment (e.g., for a 20-second embedded video, the first video segment corresponds the segment between 0 and 15 seconds, and the second video segment corresponds the segment between 15 and 20 seconds). In some embodiments, the first video segment and the second video segment have the same corresponding beginning time marker (i.e., in response to detecting the first user input, the embedded video restarts playback).

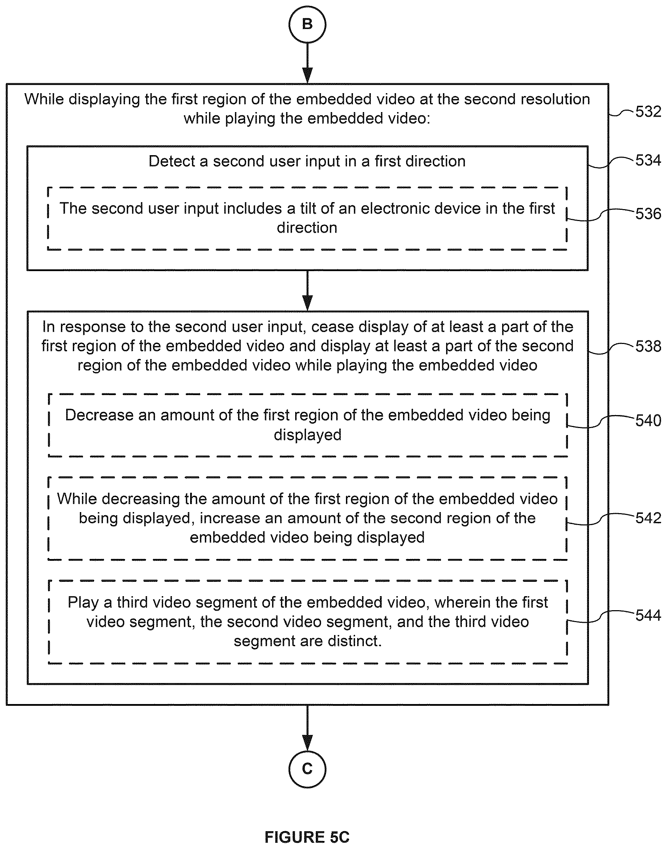

Referring now to Figure 5C, while displaying the first region of the embedded video at the second resolution while playing the embedded video (532), a second user input is detected (534) in a first direction. For example, the second user input includes a tilt (536) of the electronic device in the first direction. The tilt may be a rotational tilt, include a turning of the electronic device in a direction (e.g., clockwise or counter-clockwise) with respect to an axis (e.g., an axis that bisects the display) (e.g., an axis of a horizontal plane). For example, Figures 4C-4E illustrate views of the client device 104-1 from the bottom of the device seen at eye level (i.e., cross-sectional views). With reference to the orientation of the client device 104-1 in Figure 4C (no tilt), the tilt gesture 408-1 (Figure 4D) is a rotational tilt in a counter-clockwise direction.

While displaying the first region of the embedded video at the second resolution while playing the embedded video (532), and in response to the second user input, the electronic device ceases (538) display of at least a part of the first region of the embedded video and displays at least a part of the second region of the embedded video while playing the embedded video. Figures 4C and 4D illustrate an example. In response to detecting the tilt gesture 408-1 (Figure 4D), the client device 104-1 transitions from displaying the first region of the embedded video 402-1 (Figure 4C) to displaying the second region of the embedded video 402-2 (Figure 4D). As shown in Figure 4D, the second region of the embedded video 402-2 includes part of the first region 402-1 (shown in Figure 4C), while the remaining part of the first region 402-1 is no longer displayed. The user input in the first direction (e.g., tilt gesture 408-1, Figure 4D) therefore allows a user to manipulate and interact with an embedded video while it plays. In this example, the user is able to view regions of an embedded video that are not within the display area in operation 522 (i.e., portions that are no longer visible after enlarging the resolution of the embedded video 402 from the first resolution to the second resolution).

In some embodiments, ceasing (538) display of at least a part of the first region of the embedded video and displaying at least a part of the second region of the embedded video includes (540) decreasing an amount of the first region of the embedded video being displayed. Furthermore, while decreasing (540) the amount of the first region of the embedded video being displayed, an amount of the second region of the embedded video being displayed is increased (542). For example, in response to detecting the tilt gesture 408-1 in Figure 4D (i.e., transitioning from the GUI of Figure 4C to 4D), the amount of the first region of the embedded video 402-1 being displayed is decreased, while the amount of the second region of the embedded video 402-2 being displayed is increased. Translation within the embedded video from the first region to the second region thus is achieved in accordance with some embodiments.

In some embodiments, ceasing (538) display of at least a part of the first region of the embedded video and displaying at least a part of the second region of the embedded video includes playing (544) a third video segment of the embedded video, wherein the first video segment, the second video segment, and the third video segment are distinct. In some embodiments, the first video segment, the second video segment, and the third video segment of the embedded video are continuous. As an example, the segment of the playing embedded video 402 starting from Figure 4A up until Figure 4C corresponds to a first video segment, the segment starting from Figure 4C up until Figure 4D corresponds to a second video segment, and the segment starting from Figure 4D onwards corresponds to a third video segment. Thus, in some embodiments, irrespective of which and whether user inputs are detected, the embedded video continues playing without interruption to playback.

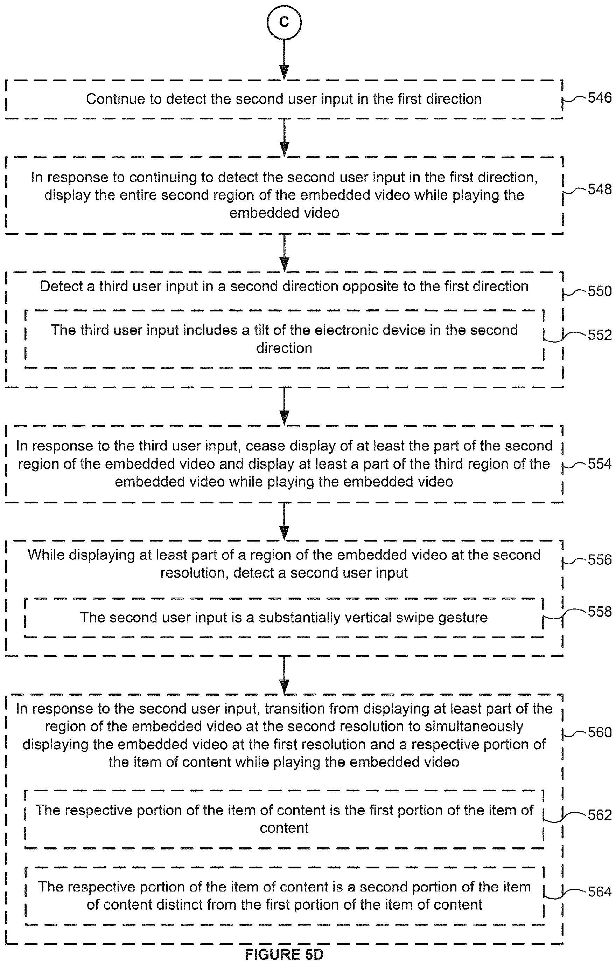

Referring now to Figure 5D, in some embodiments, the electronic device continues (546) to detect the second user input in the first direction. In response to continuing to detect the second user input in the first direction, the electronic device displays (548) the entire second region of the embedded video while playing the embedded video. For example, continued or increased tilting of the electronic device results in further translation within the embedded video.

In some embodiments, a third user input is detected (550) in a second direction opposite to the first direction. In some embodiments, the third user input includes (552) a tilt of the electronic device in the second direction. For example, a tilt gesture 408-2 is detected in Figure 4E, which is a rotational tilt in a clockwise direction (opposite to the direction of the tilt gesture 408-1, Figure 4D). In response to the third user input, the electronic device ceases (554) display of at least the part of the second region of the embedded video and displays at least a part of the third region of the embedded video while playing the embedded video. (If operations 534 and 538 are omitted from the method 500, then display of at least part of the first region of the embedded video ceases and at least a part of the third region of the embedded video is displayed.) In Figure 4E, for example, in response to detecting a tilt gesture 408-2, the client device 104-1 transitions from displaying the second region of the embedded video 402-2 (Figure 4D) to displaying the third region of the embedded video 402-3 (Figure 4E). In the example of Figure 4E, the third region of the embedded video 402-3 includes part of the first region 402-1 (shown in Figure 4C). Alternatively, the first and third regions do not overlap. Thus, in some embodiments, the part of the first region of the embedded video that is no longer displayed while displaying the second region of the embedded video is displayed while displaying the third region of the embedded video.

In some embodiments, the height of the embedded video at the second resolution would exceed the display height of the display area. Thus, in some embodiments, the electronic device ceases displaying regions above and/or below the first region (e.g., top and/or bottom regions of the embedded video), along with a second region (e.g., adjacent and to the left of the first region) and a third region (e.g., adjacent and to the right of the first region) of the embedded video. In these embodiments, in response to detecting a user input in a first direction (e.g., clockwise), at least part of the second region of the embedded video is displayed, and in response to detecting a user input in a second direction opposite to the first direction (e.g., counter-clockwise), at least part of the third region of the embedded video is displayed. In some embodiments, in response to detecting a user input in a third direction distinct from the first and second direction (e.g., substantially perpendicular to the first and second directions), the electronic device displays at least some of the top or bottom region that ceased being displayed. Continuing the example above, if a tilt gesture is detected with respect to an axis distinct from (e.g., substantially perpendicular to) the first and second directions (e.g., with reference to the display as viewed by a user holding a device, a side-to-side axis, rather than a top-to-bottom axis), a top or bottom region of the embedded video is displayed.

In some embodiments, the amount of a respective region of the embedded video being displayed in response to detecting a user input (e.g., a rotational tilt) is proportional to the magnitude of the user input. The magnitude of a rotational tilt, for example, corresponds to the angle of the rotational tilt with respect to a predefined axis (e.g., longitudinal/latitudinal axes of a planar surface of the client device 104-1, such as axes that bisect the display). As an example, referring to Figure 4D, the amount of the second region 402-2 displayed in response to detecting the tilt gesture 408-1 that forms a first angle (e.g., a 15 degree angle) with the horizontal axis, is less than an amount of the second region 402-2 that would displayed in response to detecting a tilt gesture in the same direction that forms a second, larger angle (e.g., a 45 degree angle).

In some embodiments, the direction of the rotational tilt is with reference to one or more axes of a predefined plane (e.g., the plane of the display at the time the first user input is detected, but not substantially perpendicular to a plane defined by the direction of gravity). Axes based on a predefined plane may therefore allow a user to more naturally view or interact with embedded content without requiring the user to adjust his viewing angle or orient the client device to conform to arbitrarily defined axes.

In some embodiments, while displaying at least part of a region of the embedded video at the second resolution (e.g., any of the regions 402 shown in Figures 4C-4E), a user input is detected (556). In some embodiments, the user input is (558) a substantially vertical swipe gesture. Additionally and/or alternatively, the user input may be a tap gesture (e.g., single tap). In response to the user input (556) detected while displaying at least part of the region of the embedded video at the second resolution, the electronic device transitions (560) from displaying at least part of the region of the embedded video at the second resolution to simultaneously displaying the embedded video at the first resolution and a respective portion of the item of content while playing the embedded video. For example, a swipe gesture 404-2 (Figure 4F) in a substantially vertical direction is detected while displaying the first region of the embedded video 402-1. In response, the entire embedded video 402 and a portion of the item of content 400 are simultaneously displayed, as shown in Figure 4G.

In some embodiments, the respective portion of the item of content is (562) the first portion of the item of content (502). In other words, the electronic device reverts back to displaying the portion of the item of content that was displayed prior to displaying the embedded video at the second resolution. In other embodiments, the respective portion of the item of content is (562) a second portion of the item of content distinct (564) from the first portion of the item of content (e.g., more text is displayed below the embedded video 402 in Figure 4G than in Figure 4B). In another example, in response to the swipe gesture 404-2 (Figure 4F), the electronic device may smoothly transition back to displaying the embedded video 402 at the prior resolution (i.e., gradually decrease the displayed resolution of the embedded video 402 from the second resolution to the first resolution). Until the displayed embedded video 402 returns to the first resolution, the portion of the item of content 400 being displayed is therefore different from the first portion displayed in Figure 4B.

For situations in which the systems discussed above collect information about users, the users may be provided with an opportunity to opt in/out of programs or features that may collect personal information (e.g., information about a user's preferences or a user's contributions to social content providers). In addition, in some embodiments, certain data may be anonymized in one or more ways before it is stored or used, so that personally identifiable information is removed. For example, a user's identity may be anonymized so that the personally identifiable information cannot be determined for or associated with the user, and so that user preferences or user interactions are generalized (for example, generalized based on user demographics) rather than associated with a particular user.

Although some of various drawings illustrate a number of logical stages in a particular order, stages which are not order dependent may be reordered and other stages may be combined or broken out. While some reordering or other groupings are specifically mentioned, others will be apparent to those of ordinary skill in the art, so the ordering and groupings presented herein are not an exhaustive list of alternatives. Moreover, it should be recognized that the stages could be implemented in hardware, firmware, software or any combination thereof.

## Claims

1. A method, comprising:
at an electronic device (104) having one or more processors (302) and memory (306) storing instructions for execution by the one or more processors:
within an item of content (400), simultaneously playing an embedded video and displaying a first portion of the item of content distinct from the embedded video in a display area, the embedded video being played at a first resolution at which the entire width of the embedded video is contained within the display area (312), wherein playing the embedded video comprises displaying a first region and a second region of the embedded video, wherein the first region (402-1) and the second region (402-2) of the embedded video are distinct;
detecting a first user input (406) indicating selection of the embedded video;
in response to the first user input:
ceasing display of the first portion of the item of content; and
while playing the embedded video:
displaying the first region of the embedded video at a second resolution that is greater than the first resolution; and
ceasing display of the second region of the embedded video; and
while displaying the first region of the embedded video at the second resolution while playing the embedded video:
detecting a second user input (408-1) in a first direction of the electronic device; and
in response to the second user input, ceasing display of at least a part of the first region of the embedded video and displaying at least a part of the second region of the embedded video while playing the embedded video.

2. The method of claim 1, wherein the second user input comprises a tilt of the electronic device in the first direction.

3. The method of claim 1 or 2, wherein playing the embedded video at the first resolution further comprises displaying a third region of the embedded video along with the first region and second region of the embedded video, wherein the first region, the second region, and the third region of the embedded video are distinct, the method further comprising:
in response to the first user input and while playing the embedded video, ceasing display of the third region of the embedded video.

4. The method of claim 3, further comprising:
after detecting the second user input, detecting a third user input (408-2) in a second direction opposite to the first direction; and
in response to the third user input, ceasing display of at least the part of the second region of the embedded video and displaying at least a part of the third region of the embedded video while playing the embedded video;
preferably wherein:
the second user input comprises a tilt of the electronic device in the first direction; and
the third user input comprises a tilt of the electronic device in the second direction.

5. The method of any of claims 1 to 4, further comprising:
continuing to detect the second user input in the first direction; and
in response to continuing to detect the second user input in the first direction, displaying the entire second region of the embedded video while playing the embedded video.

6. The method of any of claims 1 to 5, wherein ceasing display of at least the part of the first region of the embedded video and displaying at least the part of the second region of the embedded video comprise:
decreasing an amount of the first region of the embedded video being displayed, and
while decreasing the amount of the first region of the embedded video being displayed, increasing an amount of the second region of the embedded video being displayed.

7. The method of any of claims 1 to 6, wherein:
playing the embedded video before detecting the first user input comprises playing a first video segment of the embedded video; and
playing the embedded video after detecting the first user input comprises playing a second video segment of the embedded video,
wherein the first video segment and the second video segment are distinct.

8. The method of claim 7, wherein the second video segment of the embedded video continues from the end of the first video segment; and/or wherein:
playing the second video segment of the embedded video is performed before detecting the second user input; and
playing the embedded video after detecting the second user input comprises playing a third video segment of the embedded video,
wherein the first video segment, the second video segment, and the third video segment are distinct.

9. The method of any of claims 1 to 8, further comprising:
while displaying at least part of the first region or at least part of the second region of the embedded video at the second resolution, detecting a second user input; and
in response to the second user input, transitioning from displaying at least part of the first region or at least part of the second region of the embedded video at the second resolution to simultaneously displaying the embedded video at the first resolution and a respective portion of the item of content while playing the embedded video.

10. The method of claim 9, wherein the respective portion of the item of content is the first portion of the item of content; and/or
wherein the respective portion of the item of content is a second portion of the item of content distinct from the first portion of the item of content; and/or
wherein the second user input is a substantially vertical swipe gesture.

11. The method of any of claims 1 to 10, wherein the first portion of the item of content comprises a first sub-portion above the embedded video as displayed at the first resolution, and a second sub-portion below the embedded video as displayed at the first resolution.

12. The method of any of claims 1 to 11, wherein:
the electronic device comprises a display device having a screen area; and
the display area occupies the screen area of the display device; and/or
wherein the display area has a display height and a display width, and
wherein the width of the embedded video being played at the first resolution is contained within the display width of the display area.

13. The method of any of claims 1 to 12, wherein:
ceasing display of the first portion of the item of content comprises decreasing an amount of the first portion of the item of content being displayed until the first portion of the item of content is no longer displayed; and
the method further comprises, in response to the first user input and before displaying the first region of the embedded video at the second resolution, increasing the resolution of the first region of the embedded video being displayed until the first region of the embedded video is displayed at the second resolution, while decreasing the amount of the first portion of the item of content being displayed and while decreasing a percentage of the embedded video being displayed.

14. An electronic device (104) comprising:
one or more processors (308); and
at least one memory (306) coupled to the processors and comprising instructions executable by the processors, the processors operable when executing the instructions to perform a method according to any of the claims 1 to 13.

15. One or more computer-readable non-transitory storage media embodying software that is operable when executed by one or more processors to perform a method according to any of claims 1 to 13.

## Patentansprüche

1. Verfahren, das umfasst:
an einer elektronischen Vorrichtung (104), die einen oder mehrere Prozessoren (302) und Speicher (306) aufweist, der Anweisungen zum Ausführen durch den einen oder mehrere Prozessoren speichert:
innerhalb eines Inhaltselements (400),
gleichzeitig ein eingebettetes Video abzuspielen und einen ersten Abschnitt des Inhaltselements, der sich von dem eingebetteten Video unterscheidet, in einer Anzeigefläche anzuzeigen, wobei das eingebettete Video mit einer ersten Auflösung abgespielt wird, bei der die gesamte Breite des eingebetteten Videos in der Anzeigefläche (312) enthalten ist,
wobei ein Abspielen des eingebetteten Videos ein Anzeigen eines ersten Bereichs und eines zweiten Bereichs des eingebetteten Videos umfasst, wobei der erste Bereich (402-1) und der zweite Bereich (402-2) des eingebetteten Videos unterschiedlich sind;
Erkennen einer ersten Benutzereingabe (406), die ein Auswählen des eingebetteten Videos angibt;
als Reaktion auf die erste Benutzereingabe:
Beenden eines Anzeigens des ersten Abschnitts des Inhaltselements; und
beim Abspielen des eingebetteten Videos:
Anzeigen des ersten Bereichs des eingebetteten Videos mit einer zweiten Auflösung, die größer als die erste Auflösung ist; und
Beenden eines Anzeigens des zweiten Bereichs des eingebetteten Videos; und
beim Anzeigen des ersten Bereichs des eingebetteten Videos mit der zweiten Auflösung während eines Abspielens des eingebetteten Videos:
Erkennen einer zweiten Benutzereingabe (408-1) in einer ersten Richtung der elektronischen Vorrichtung; und
als Reaktion auf die zweite Benutzereingabe, Beenden eines Anzeigens mindestens eines Teils des ersten Bereichs des eingebetteten Videos und Anzeigen mindestens eines Teils des zweiten Bereichs des eingebetteten Videos beim Abspielen des eingebetteten Videos.

2. Verfahren nach Anspruch 1, wobei die zweite Benutzereingabe ein Neigen der elektronischen Vorrichtung in die erste Richtung umfasst.

3. Verfahren nach Anspruch 1 oder 2, wobei ein Abspielen des eingebetteten Videos mit der ersten Auflösung ferner ein Anzeigen eines dritten Bereichs des eingebetteten Videos zusammen mit dem ersten Bereich und zweiten Bereich des eingebetteten Videos umfasst, wobei der erste Bereich, der zweite Bereich und der dritte Bereich des eingebetteten Videos unterschiedlich sind, wobei das Verfahren ferner umfasst:
als Reaktion auf die erste Benutzereingabe und beim Abspielen des eingebetteten Videos, Beenden eines Anzeigens des dritten Bereichs des eingebetteten Videos.

4. Verfahren nach Anspruch 3, das ferner umfasst:
nach einem Erkennen der zweiten Benutzereingabe, Erkennen einer dritten Benutzereingabe (408-2) in einer zweiten Richtung entgegengesetzt zu der ersten Richtung; und
als Reaktion auf die dritte Benutzereingabe, Beenden eines Anzeigens mindestens des Teils des zweiten Bereichs des eingebetteten Videos und Anzeigen mindestens eines Teils des dritten Bereichs des eingebetteten Videos beim Abspielen des eingebetteten Videos;
wobei bevorzugt:
die zweite Benutzereingabe ein Neigen der elektronischen Vorrichtung in die erste Richtung umfasst; und
die dritte Benutzereingabe ein Neigen der elektronischen Vorrichtung in die zweite Richtung umfasst.

5. Verfahren nach einem der Ansprüche 1 bis 4, das ferner umfasst:
Fortfahren mit einem Erkennen der zweiten Benutzereingabe in der ersten Richtung; und
als Reaktion auf ein Fortfahren mit einem Erkennen der zweiten Benutzereingabe in der ersten Richtung, Anzeigen des gesamten zweiten Bereichs des eingebetteten Videos beim Abspielen des eingebetteten Videos.

6. Verfahren nach einem der Ansprüche 1 bis 5, wobei ein Beenden eines Anzeigens mindestens des Teils des ersten Bereichs des eingebetteten Videos und Anzeigen mindestens des Teils des zweiten Bereichs des eingebetteten Videos umfassen: Verringern eines Ausmaßes des ersten Bereichs des eingebetteten Videos, das angezeigt wird, und
beim Verringern des Ausmaßes des ersten Bereichs des eingebetteten Videos, das angezeigt wird, Erhöhen eines Ausmaßes des zweiten Bereichs des eingebetteten Videos, das angezeigt wird.

7. Verfahren einem der Ansprüche 1 bis 6, wobei:
ein Abspielen des eingebetteten Videos vor einem Erkennen der ersten Benutzereingabe ein Abspielen eines ersten Videosegments des eingebetteten Videos umfasst; und
ein Abspielen des eingebetteten Videos nach einem Erkennen der ersten Benutzereingabe ein Abspielen eines zweiten Videosegments des eingebetteten Videos umfasst, wobei das erste Videosegment und das zweite Videosegment unterschiedlich sind.

8. Verfahren nach Anspruch 7, wobei mit dem zweiten Videosegment des eingebetteten Videos von dem Ende des ersten Videosegments an fortgefahren wird; und/oder wobei:
ein Abspielen des zweiten Videosegments des eingebetteten Videos vor einem Erkennen der zweiten Benutzereingabe durchgeführt wird; und
ein Abspielen des eingebetteten Videos nach einem Erkennen der zweiten Benutzereingabe ein Abspielen eines dritten Videosegments des eingebetteten Videos umfasst, wobei das erste Videosegment, das zweite Videosegment und das dritte Videosegment unterschiedlich sind.

9. Verfahren nach einem der Ansprüche 1 bis 8, das ferner umfasst:
beim Abspielen mindestens eines Teils des ersten Bereichs oder mindestens eines Teils des zweiten Bereichs des eingebetteten Videos mit der zweiten Auflösung, Erkennen einer zweiten Benutzereingabe; und
als Reaktion auf die zweite Benutzereingabe, Übergehen von einem Anzeigen mindestens eines Teils des ersten Bereichs oder mindestens eines Teils des zweiten Bereichs des eingebetteten Videos mit der zweiten Auflösung zu einem gleichzeitigen Anzeigen des eingebetteten Videos mit der ersten Auflösung und eines jeweiligen Abschnitts des Inhaltselements beim Abspielen des eingebetteten Videos.

10. Verfahren nach Anspruch 9, wobei der jeweilige Abschnitt des Inhaltselements der erste Abschnitt des Inhaltselements ist; und/oder
wobei der jeweilige Abschnitt des Inhaltselements ein zweiter Abschnitt des Inhaltselements ist, der sich von dem ersten Abschnitt des Inhaltselements unterscheidet; und/oder
wobei die zweite Benutzereingabe eine im Wesentlichen vertikale Wischgeste ist.

11. Verfahren nach einem der Ansprüche 1 bis 10, wobei der erste Abschnitt des Inhaltselements einen ersten Teilabschnitt oberhalb des eingebetteten Videos, wie es mit der ersten Auflösung angezeigt wird, und einen zweiten Teilabschnitt unterhalb des eingebetteten Videos umfasst, wie es mit der ersten Auflösung angezeigt wird.

12. Verfahren einem der Ansprüche 1 bis 11, wobei:
die elektronische Vorrichtung eine Anzeigevorrichtung umfasst, die eine Bildschirmfläche aufweist; und
die Anzeigefläche die Bildschirmfläche der Anzeigevorrichtung einnimmt;
und/oder wobei die Anzeigefläche eine Anzeigehöhe und eine Anzeigebreite aufweist, und
wobei die Breite des eingebetteten Videos, das mit der ersten Auflösung abgespielt wird, in der Anzeigebreite der Anzeigefläche enthalten ist.

13. Verfahren einem der Ansprüche 1 bis 12, wobei:
ein Beenden eines Anzeigens des ersten Abschnitts des Inhaltselements ein Verringern eines Ausmaßes des ersten Abschnitts des angezeigten Inhaltselements umfasst, bis der erste Abschnitt des Inhaltselements nicht länger angezeigt wird; und
das Verfahren ferner umfasst, als Reaktion auf die erste Benutzereingabe und vor einem Anzeigen des ersten Bereichs des eingebetteten Videos mit der zweiten Auflösung die Auflösung des ersten Bereichs des angezeigten eingebetteten Videos zu erhöhen, bis der erste Bereich des eingebetteten Videos mit der zweiten Auflösung angezeigt wird, während das Ausmaß des ersten Abschnitts des angezeigten Inhaltselements verringert wird, und während ein Prozentanteil des angezeigten eingebetteten Videos verringert wird.

14. Elektronische Vorrichtung (104), die umfasst:
einen oder mehrere Prozessoren (308); und
mindestens einen Speicher (306), der mit den Prozessoren gekoppelt ist und Anweisungen umfasst, die durch die Prozessoren ausführbar sind, wobei die Prozessoren derart betreibbar sind, dass sie, wenn sie die Anweisungen ausführen, ein Verfahren nach einem der Ansprüche 1 bis 13 durchführen.

15. Ein oder mehrere computerlesbare nichtflüchtige Speichermedien, die Software verkörpern, die derart betreibbar ist, dass sie, wenn sie von einem oder mehreren Prozessoren ausgeführt wird, ein Verfahren nach einem der Ansprüche 1 bis 13 durchführt.

## Revendications

1. Procédé, comprenant:
au niveau d'un dispositif électronique (104) ayant un ou plusieurs processeurs (302) et une mémoire (306), stocker des instructions destinées à être exécutées par le ou les processeurs;
dans un élément de contenu (400), lire simultanément une vidéo intégrée et afficher une première partie de l'élément de contenu distincte de la vidéo intégrée dans une zone d'affichage, la vidéo intégrée étant lue à une première résolution à laquelle la totalité de la largeur de la vidéo intégrée est contenue dans la zone d'affichage (312),
la lecture de la vidéo intégrée comprenant l'affichage d'une première région et d'une deuxième région de la vidéo intégrée, la première région (402-1) et la deuxième région (402-2) de la vidéo intégrée étant distinctes;
détecter une première entrée d'utilisateur (406) indiquant une sélection de la vidéo intégrée;
en réponse à la première entrée d'utilisateur:
cesser l'affichage de la première partie de l'élément de contenu; et
pendant la lecture de la vidéo intégrée:
afficher la première région de la vidéo intégrée à une deuxième résolution qui est supérieure à la première résolution; et
cesser l'affichage de la deuxième région de la vidéo intégrée; et
pendant l'affichage de la première région de la vidéo intégrée à la deuxième résolution tout en lisant la vidéo intégrée:
détecter une deuxième entrée d'utilisateur (408-1) dans une première direction du dispositif électronique; et
en réponse à la deuxième entrée d'utilisateur, cesser l'affichage d'au moins une partie de la première région de la vidéo intégrée et afficher au moins une partie de la deuxième région de la vidéo intégrée tout en lisant la vidéo intégrée.

2. Procédé selon la revendication 1, dans lequel la deuxième entrée d'utilisateur comprend une inclinaison du dispositif électronique dans la première direction.

3. Procédé selon la revendication 1 ou 2, dans lequel la lecture de la vidéo intégrée à la première résolution comprend en outre l'affichage d'une troisième région de la vidéo intégrée conjointement avec la première région et la deuxième région de la vidéo intégrée, la première région, la deuxième région et la troisième région de la vidéo intégrée étant distinctes, le procédé comprenant en outre:
en réponse à la première entrée d'utilisateur et tout en lisant la vidéo intégrée, cesser l'affichage de la troisième région de la vidéo intégrée.

4. Procédé selon la revendication 3, comprenant en outre:
après la détection de la deuxième entrée d'utilisateur, détecter une troisième entrée d'utilisateur (408-2) dans une deuxième direction opposée à la première direction; et
en réponse à la troisième entrée d'utilisateur, cesser l'affichage d'au moins la partie de la deuxième région de la vidéo intégrée et afficher au moins une partie de la troisième région de la vidéo intégrée tout en lisant la vidéo intégrée;
de préférence:
la deuxième entrée d'utilisateur comprenant une inclinaison du dispositif électronique dans la première direction; et
la troisième entrée d'utilisateur comprenant une inclinaison du dispositif électronique dans la deuxième direction.

5. Procédé selon l'une quelconque des revendications 1 à 4, comprenant en outre:
continuer de détecter la deuxième entrée d'utilisateur dans la première direction; et
en réponse à la poursuite de la détection de la deuxième entrée d'utilisateur dans la première direction, afficher la totalité de la deuxième région de la vidéo intégrée tout en lisant la vidéo intégrée.

6. Procédé selon l'une quelconque des revendications 1 à 5, dans lequel l'arrêt de l'affichage d'au moins la partie de la première région de la vidéo intégrée et l'affichage d'au moins la partie de la deuxième région de la vidéo intégrée comprennent:
diminuer une quantité de la première région de la vidéo intégrée qui est affichée, et
tout en diminuant la quantité de la première région de la vidéo intégrée qui est affichée, augmenter une quantité de la deuxième région de la vidéo intégrée qui est affichée.

7. Procédé selon l'une quelconque des revendications 1 à 6, dans lequel:
la lecture de la vidéo intégrée avant la détection de la première entrée d'utilisateur comprend la lecture d'un premier segment vidéo de la vidéo intégrée; et
la lecture de la vidéo intégrée après la détection de la première entrée d'utilisateur comprend la lecture d'un deuxième segment vidéo de la vidéo intégrée,
le premier segment vidéo et le deuxième segment vidéo étant distincts.

8. Procédé selon la revendication 7, dans lequel le deuxième segment vidéo de la vidéo intégrée continue à partir de la fin du premier segment vidéo; et/ou dans lequel:
la lecture du deuxième segment vidéo de la vidéo intégrée est réalisée avant la détection de la deuxième entrée d'utilisateur; et
la lecture de la vidéo intégrée après la détection de la deuxième entrée d'utilisateur comprend la lecture d'un troisième segment vidéo de la vidéo intégrée,
le premier segment vidéo, le deuxième segment vidéo et le troisième segment vidéo étant distincts.

9. Procédé selon l'une quelconque des revendications 1 à 8, comprenant en outre:
pendant l'affichage d'au moins une partie de la première région ou d'au moins une partie de la deuxième région de la vidéo intégrée à la deuxième résolution, détecter une deuxième entrée d'utilisateur; et
en réponse à la deuxième entrée d'utilisateur, passer de l'affichage d'au moins une partie de la première région ou d'au moins une partie de la deuxième région de la vidéo intégrée à la deuxième résolution à l'affichage simultané de la vidéo intégrée à la première résolution et d'une partie respective de l'élément de contenu tout en lisant la vidéo intégrée.

10. Procédé selon la revendication 9, dans lequel la partie respective de l'élément de contenu est la première partie de l'élément de contenu; et/ou
dans lequel la partie respective de l'élément de contenu est une deuxième partie de l'élément de contenu distincte de la première partie de l'élément de contenu; et/ou
dans lequel la deuxième entrée d'utilisateur est un geste de glissement sensiblement vertical.

11. Procédé selon l'une quelconque des revendications 1 à 10, dans lequel la première partie de l'élément de contenu comprend une première sous-partie au-dessus de la vidéo intégrée telle qu'affichée à la première résolution, et une deuxième sous-partie au-dessous de la vidéo intégrée telle qu'affichée à la première résolution.

12. Procédé selon l'une quelconque des revendications 1 à 11, dans lequel:
le dispositif électronique comprend un dispositif d'affichage ayant une zone d'écran; et
la zone d'affichage occupe la zone d'écran du dispositif d'affichage; et/ou dans lequel la zone d'affichage a une hauteur d'affichage et une largeur d'affichage, et
la largeur de la vidéo intégrée qui est lue à la première résolution est contenue dans la largeur d'affichage de la zone d'affichage.

13. Procédé selon l'une quelconque des revendications 1 à 12, dans lequel:
l'arrêt de l'affichage de la première partie de l'élément de contenu comprend la diminution d'une quantité de la première partie de l'élément de contenu qui est affichée jusqu'à ce que la première partie de l'élément de contenu ne soit plus affichée; et
le procédé comprend en outre, en réponse à la première entrée d'utilisateur et avant l'affichage de la première région de la vidéo intégrée à la deuxième résolution, l'augmentation de la résolution de la première région de la vidéo intégrée qui est affichée jusqu'à ce que la première région de la vidéo intégrée soit affichée à la deuxième résolution, tout en diminuant la quantité de la première partie de l'élément de contenu qui est affichée et tout en diminuant un pourcentage de la vidéo intégrée qui est affichée.

14. Dispositif électronique (104) comprenant:
un ou plusieurs processeurs (308); et
au moins une mémoire (306) couplée aux processeurs et comprenant des instructions pouvant être exécutées par les processeurs, les processeurs étant fonctionnels lors de l'exécution des instructions pour réaliser un procédé selon l'une quelconque des revendications 1 à 13.

15. Support(s) de stockage non-transitoire(s) lisible(s) par ordinateur incorporant un logiciel qui est fonctionnel, lorsqu'il est exécuté par un ou plusieurs processeurs, pour réaliser un procédé selon l'une quelconque des revendications 1 à 13.
